# EUROPÄISCHE PATENTSCHRIFT

(11) **EP 3 281 890 B1**
(45) Veröffentlichungstag und Bekanntmachung des Hinweises auf die Patenterteilung: **05.04.2023**
(21) Anmeldenummer: 17174480.8
(22) Anmeldetag: 06.06.2017
(51) Int. Cl.: B65G 15/40

(54) **GESCHLOSSENER FÖRDERGURT**
CLOSED CONVEYOR BELT
BANDE TRANSPORTEUSE FERMÉE

(30) Priorität: 11.08.2016 DE 102016214921
(43) Veröffentlichungstag der Anmeldung: 14.02.2018
(73) Patentinhaber: ContiTech Transportbandsysteme GmbH, 30165 Hannover (DE)
(72) Erfinder: Müller, Georg, 50678 Köln (DE); Behrens, Carsten, 37434 Bilshausen (DE); Nolte, Hartwig, 37181 Hardegsen (DE); Schlomski, Jens, 37115 Duderstadt (DE); Stange, Lysander, 37154 Northeim (DE)
(74) Vertreter: Continental Corporation

(56) Entgegenhaltungen:
- DE-A1-102008 037 457
- DE-A1-102013 111 190
- DE-A1-102014 215 637
- GB-A- 2 054 507
- JP-U- S55 117 406
- US-A1- 2011 083 945

## Beschreibung

Die Erfindung betrifft einen geschlossenen Fördergurt.

Derartige geschlossene Fördergurte sind bspw. derzeit unter dem Handelsnamen SICON^{®} erhältlich. Diese geschlossenen Fördergurte bestehen aus einer tropfenförmigen "Tasche" aus einer hochflexiblen Kautschukmischung, so dass sie auch als Taschenfördergurt oder als Taschengurt bezeichnet werden. An den beiden Enden sind mittels Heißvulkanisation Tragprofile angebracht, die der Gurtführung zwischen Stütz- und Führungsrollen dienen. Im Zentrum der Profile sind Stahlseile einvulkanisiert, welche die Gurtzugkräfte von den Antriebselementen übernehmen. Die Profile sind übereinander angeordnet, dadurch ist der Gurt staubdicht geschlossen. Diese Profil-Anordnung ermöglicht dem Gurt außerdem eine seitliche Neigung, so dass der Kurvenradius weniger als ein Meter betragen kann.

Die Beladung kann an jeder gewünschten Stelle in der Transportstrecke erfolgen. Der Gurt wird mit Sonderführungsrollen zu einer U-förmigen Tasche geöffnet. Das Fördergut aufnehmende Gurtteil, im Folgenden als Gurttasche oder Tasche bezeichnet, dämpft die Fallenergie, beruhigt, beschleunigt und umschließt anschließend das Fördergut. Ebenso ist ein Zwischenabwurf an jeder Stelle der Transportstrecke möglich.

Die Gurttasche wird von den Profilen getragen, welche, wie bereits erwähnt, die Zugkräfte aufnehmen und den Gurt führen. Um diesen mechanischen Belastungen stand halten zu können, werden die Profile zum Teil zusätzlich lokal mit textilen Festigkeitsträgern, zumeist in Form von Geweben, verstärkt.

Tasche und Profil werden meist mittels Heißvulkanisation, für die ein zusätzlicher und zeitaufwendiger Produktionsschritt notwendig ist, oder mittels Verklebung, für die Zeiten zum Einstreichen des Klebers und / oder Haftvermittlers und Ablüften einkalkuliert werden müssen, miteinander verbunden.

Die so fertiggestellten Taschenfördergurte müssen zum Versenden an den Endkunden aufgrund ihrer Geometrie auf Trommeln gewickelt oder in Containern mit Hilfe von Abstandshaltern eingesetzt werden. Beides ist vor allem zeitlich aufwendig und fehleranfällig.

JP S55 117406 U offenbart einen geschlossenen Fördergurt nach dem Oberbegriff des Anspruchs 1, wobei das ganze Gurtteil eine Verstärkungslage enthält.

Die Aufgabe der vorliegenden Erfindung ist es daher, einen geschlossenen Fördergurt der eingangs genannten Art bereitzustellen, der sich durch eine Verkürzung der Zeit für die Verbindung der Gurttasche an das Gurtprofil auszeichnet, ohne die physikalischen und mechanischen Eigenschaften des Fördergurtes negativ zu beeinträchtigen. Gleichzeitig soll der geschlossene Fördergurt für die Lieferung an den Endkunden einfach zu verpacken sein.

Diese Aufgabe wird durch den geschlossenen Fördergurt nach Anspruch 1 gelöst.

Überraschenderweise hat sich gezeigt, dass durch einen derartigen Aufbau sich eine gute mechanische Verbindung zwischen Profil und Tasche erzielen lässt, da nun durch den verstärkten Taschenbereich und das Profil wenigstens ein mechanisches Verbindungselement, wie bspw. eine Niete und / oder eine Schraube und / oder ein Hakenverbinder und / oder ähnliches, geführt werden kann. Hierdurch wird das Verbinden von Tasche und Profil deutlich beschleunigt. Es sind keine Vulkanisations- oder Klebzeiten mehr notwendig. Tasche und Profil können separat verpackt und vor Ort miteinander verbunden werden, was den Verpackungsaufwand ebenso deutlich reduziert. Etwaige Reparaturen sind einfacher durchzuführen. Idealerweise ist das Profil hierbei selbst auch durch ein Gewebe zusätzlich verstärkt.

Die Gurttasche ist bevorzugt einlagig oder mehrlagig ausgestaltet.

Besonders bevorzugt ist die Gurttasche zweilagig ausgebildet und besteht aus einer Oberseite und einer Unterseite. Die Lage A der Oberseite und die Lage B der Unterseite bestehen hierbei jeweils aus einer Kautschukmischung, die verschieden voneinander sind. Bevorzugt befindet sich auf der Oberseite der Tasche, d.h. die Seite, die in direktem Kontakt zu dem zu transportierenden Fördergut steht, eine Kautschukmischung mit einer hohen Medienbeständigkeit. Es können alle geeigneten Kautschuktypen verwendet werden. Bevorzugt werden als Kautschuke hierfür in der Regel Nitrilkautschuk (NBR), der gegebenenfalls auch als hydrierter Nitrilkautschuk (HNBR) vorliegen kann, und / oder Fluorkautschuk, wie bspw. FKM und / oder FFKM, eingesetzt.

Auf der Unterseite der Tasche, d.h. die Seite, die keinen Kontakt zu dem zu transportierenden Fördergut besitzt, aber die höchste dynamische Beanspruchung durch ständige Biegewechsel bei Be- und Entladen erfährt, befindet sich eine sehr flexible Kautschukmischung. Als Kautschukkomponente für diese flexible Kautschukmischung kann bspw. Butylkautschuk und / oder Halobutylkautschuk und / oder Nitrilkautschuk und / oder Chloroprenkautschuk und / oder natürliches oder synthetisches Polyisopren und / oder Styrolbutadienkautschuk verwendet werden.

Die erfindungsgemäße zusätzliche streifenförmige Verstärkungslage im Verbindungsbereich zwischen Gurttasche und Profil ist bevorzugt ein Gewebe, Gewirk oder Gestrick. Besonders bevorzugt handelt es sich um ein Gewebe, besonders bevorzugt um ein Drehergewebe.

Diese Verstärkungslage kann entweder auf die Oberseite oder die Unterseite der Gurttasche aufgebracht werden. Ist die Gurttasche zweilagig aufgebaut, so befindet sich die Verstärkungslage aus einem textilen Flächengebilde bevorzugt zwischen diesen beiden Lagen.

Ist die Gurttasche mehrlagig aufgebaut, so befindet sich die Verstärkungslage aus einem textilen Flächengebilde bevorzugt zwischen zwei von den mehreren Lagen.

Die Streifenförmige Verstärkungslage erstreckt sich in ihrer Breite bevorzugt lediglich über den Verbindungsbereich zwischen Gurttasche und Profil. Sie schließt mit dem Verbindungsbereich ab und ist somit zwischen 10mm bis 20% der Taschenbreite breit.

Als Materialien für die zusätzliche Verstärkungslage können alle der fachkundigen Person bekannten textilen Festigkeitsträgermaterialien natürlichen oder synthetischen Ursprungs alleine oder in Kombination verwendet werden.

Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvinylalkohol in Frage. Bei den natürlichen Materialien kann es sich um Steinwolle oder Asbest oder um Baumwolle, Flachs oder Hanf, oder um Wolle oder Seide, handeln.

Die Erfindung soll nun anhand von zwei Figuren näher erläutert werden, ohne auf diese beschränkt zu sein:

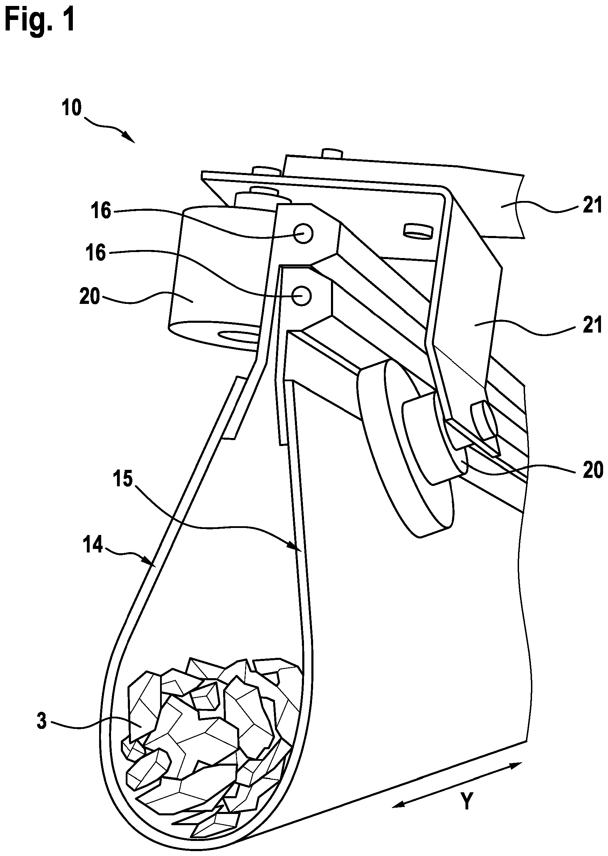

Fig. 1 zeigt einen herkömmlichen geschlossenen Fördergurt 10 mit sich darin befindlichen zu transportierendem Fördergut 3. Ein derartiger Fördergurt ist derzeit unter dem Handelsnamen SICON^{®} erhältlich. Die Gurttasche 14, 15 besteht hierbei aus lediglich einer Kautschukmischung, d.h. ist einlagig aufgebaut. Die Bauteile 20, 21 sind die Führungsschienen bzw. die Führungsrollen des Fördergurtes, y gibt die Transportrichtung an.

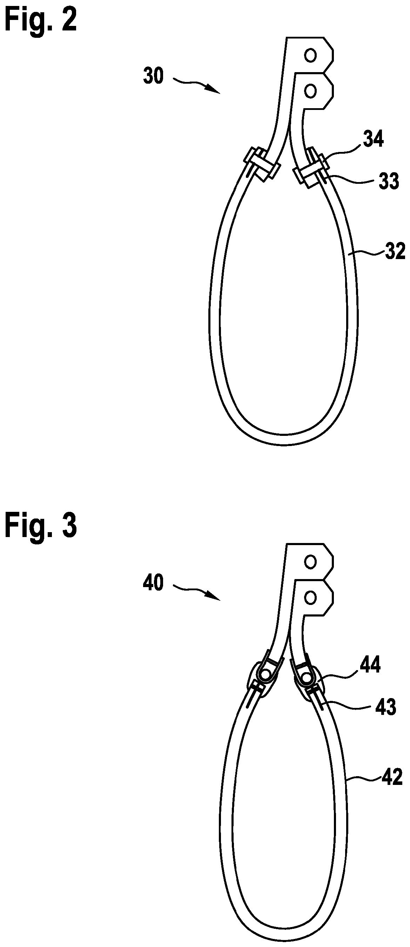

Fig. 2 zeigt einen schematischen Querschnitt durch einen geschlossenen Fördergurt 30. Die Gurttasche 32 enthält hierbei im Verbindungsbereich zwischen Gurttasche und Profil eine zusätzliche streifenförmige Verstärkungslage 33. Die Verbindung zwischen Gurttasche und Profil erfolgt in diesem Beispiel über eine Niete.
Fig. 3 zeigt einen schematischen Querschnitt durch einen geschlossenen Fördergurt 50. Die Gurttasche 42 enthält hierbei im Verbindungsbereich zwischen Gurttasche und Profil eine zusätzliche streifenförmige Verstärkungslage 43. Die Verbindung zwischen Gurttasche und Profil erfolgt in diesem Beispiel über eine Hakenverbindung 44 u.a. mit Hilfe eines Koppelseils.

### Bezugszeichenliste (Teil der Beschreibung)

- 10: geschlossener Fördergurt
- 3: Fördergut
- 14, 15: Gurtasche
- 16: Profil
- 20, 21: weitere Bauteile
- 22: Verstärkungslage
- 30, 40: geschlossener Fördergurt
- 33, 43: Verstärkungseinlage
- 32, 42: Gurttasche
- 34: Niete
- 44: Hakenverbindung

## Patentansprüche

1. Geschlossener Fördergurt (30, 40) mit einem Fördergut aufnehmenden Gurtteil (32, 42), wobei an den beiden Enden des Fördergut aufnehmenden Gurtteils (32, 42) jeweils ein Tragprofil zum Tragen des Fördergut aufnehmenden Gurtteils (32, 42) mittels mechanischer Verbindungselementen wie Nieten (34) und/oder Schrauben und/oder Hakenverbinder (43) und/oder ähnliche angebracht ist,
**dadurch gekennzeichnet, dass** das Fördergut aufnehmende Gurtteil (32, 42) an den beiden Randbereichen, die jeweils mit dem jeweiligen Tragprofil in direktem Kontakt stehen und an denen jeweils die Verbindung zwischen Fördergut aufnehmende Gurtteil (32, 42) und Tragprofil stattfindet, eine zusätzliche streifenförmige Verstärkungslage (33, 43) aus einem textilen Flächengebilde enthält und das Fördergut aufnehmende Gurtteil (32, 42) ansonsten frei von weiteren Verstärkungslagen ist.

2. Geschlossener Fördergurt nach Anspruch 1, **dadurch gekennzeichnet, dass** das textile Flächengebilde ein Gewebe ist.

3. Geschlossener Fördergurt nach Anspruch 1 oder 2, **dadurch gekennzeichnet, dass** die zusätzliche streifenförmige Verstärkungslage eine Breite von 10mm bis 20% der Taschenbreite hat.

## Claims

1. Closed conveyor belt (30, 40) having a belt part (32, 42) that receives conveyed goods, wherein on both ends of the belt part (32, 42) that receives conveyed goods one support profile for supporting the belt part (32, 42) that receives conveyed goods is in each case attached by means of mechanical connecting elements such as rivets (34) and/or screws and/or hook connectors (43) and/or similar,
**characterized in that** the belt part (32, 42) that receives conveyed goods, on both peripheral regions which are in each case in direct contact with the respective support profile and on which the connection between the belt part (32, 42) that receives conveyed goods and the support profile takes place in each case, contains an additional strip-shaped reinforcement tier (33, 43) from a textile planar formation, and the belt part (32, 42) that receives conveyed goods is otherwise free of further reinforcement tiers.

2. Closed conveyor belt according to Claim 1, **characterized in that** the textile planar formation is a woven fabric.

3. Closed conveyor belt according to Claim 1 or 2, **characterized in that** the additional strip-shaped reinforcement tier has a width of 10 mm to 20% of the pocket width.

## Revendications

1. Bande transporteuse fermée (30, 40), comprenant une partie de bande (32, 42) recevant des produits à transporter, dans laquelle, aux deux extrémités de la partie de bande (32, 42) recevant des produits à transporter, respectivement un profilé de support destiné à supporter la partie de bande (32, 42) recevant des produits à transporter est installé au moyen d'éléments d'assemblage mécaniques, tels que des rivets (34) et/ou des vis et/ou des fixations à crochet (43) et/ou similaires,
**caractérisée en ce que** la partie de bande (32, 42) recevant des produits à transporter comporte au niveau des deux zones marginales qui sont respectivement en contact direct avec le profilé de support respectif et au niveau desquelles a lieu respectivement l'assemblage entre la partie de bande (32, 42) recevant des produits à transporter et le profilé de support, une couche de renforcement (33, 43) supplémentaire, en forme de ruban, composée d'une structure textile plane, et la partie de bande (32, 42) recevant des produits à transporter est par ailleurs exempte de toute autre couche de renforcement.

2. Bande transporteuse fermée selon la revendication 1, **caractérisée en ce que** la structure textile plane est un tissu.

3. Bande transporteuse fermée selon la revendication 1 ou 2, **caractérisée en ce que** la couche de renforcement supplémentaire, en forme de ruban, présente une largeur de 10 mm jusqu'à 20 % de la largeur de poche.
